Europäisches Patentamt

European Patent Office

Office européen des brevets

(11) Publication number: **0 212 240 B1**

# EUROPEAN PATENT SPECIFICATION

(45) Date of publication of patent specification: **04.12.91**  (51) Int. Cl.⁵: **C25B 9/00**

(21) Application number: **86109616.2**

(22) Date of filing: **14.07.86**

(54) Apparatus for the electrolysis of solutions.

(30) Priority: **17.07.85 CH 3093/85**

(43) Date of publication of application:
**04.03.87 Bulletin 87/10**

(45) Publication of the grant of the patent:
**04.12.91 Bulletin 91/49**

(84) Designated Contracting States:
**AT BE DE FR GB IT NL SE**

(56) References cited:
**CH-A- 322 236**
**FR-A- 1 048 401**
**FR-A- 1 536 290**
**FR-A- 2 283 245**
**GB-A- 1 145 751**

(73) Proprietor: **METKON S.A.**
**Via Cantonale**
**CH-6855 Stabio(CH)**

(72) Inventor: **Sioli, Giancarlo**
**Via Vismara, 10**
**Cernobbio (Como)(IT)**

(74) Representative: **Incollingo, Italo**
**Piazzale Lavater, 3**
**I-20129 Milano(IT)**

## Description

This invention relates to an apparatus for the electrolysis of solutions, comprising at least a sequence of two or more bipolar elements stacked together between two terminal covers, said bipolar element comprising a frame of insulating material, on electrodic structure of conductive material inserted in said frame, and an eloctrolyte inlet and outlet.

Apparatus of this type are known and described f.i. in the French resp. Swiss patent specifications FR-A 2 283 245, CH-A- 322 236.

## STATE OF THE ART

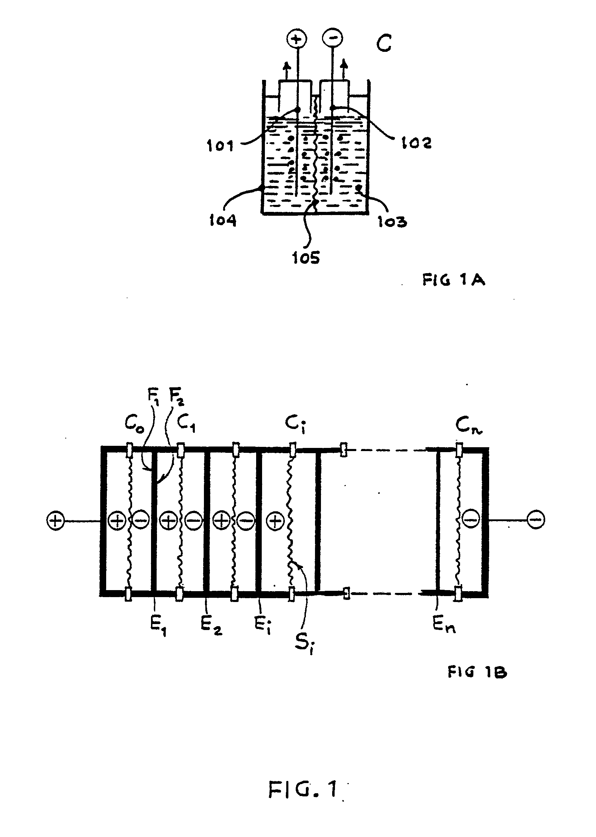

A conventional electrolysis cell C, as represented in the cross section sketch of Fig. 1A, is essentially made up of two metal electrodes as 101 and 102, of generally extented surface, submerged in a conductive fluid (electrolyte) 103, polarized in such a way as to maintain a constant electric field between them. Due to such a field, each ion in the electrolyte migrates towards the electrode polarized with opposite sign, interacting with the surface of said electrode, thereby giving rise to an electrochemical transformation of matter. The system is contained in a vessel 104 and sometimes includes a separator 105 to collect separately the gaseous products produced by the chemical process, along the electrodic surface. The separator 105 must be obviously permeable to the electric charge carriers within the electrolyte.

The amount of matter converted in the unit time depends upon the D.C. flow between the electrodes and consequently upon the extension of the electrodic surfaces. For this reason, when an increase of such amount is desired and a further increase of the electrodes surface is impracticable, it is customary to assemble a certain number of cells in series or in parallel. The series configuration, technically preferred because of the relatively reduced D.C. flow at equivalent production rate, gives rise to the well-known bipolar electrolysers, corresponding to the sketch shown in Fig. 1B. In these apparatuses the cells $C_0$, $C_1$,.... $C_i$, ....$C_n$ are separated from each other by conductive elements $E_1$, $E_2$, .... $E_i$, .... $E_n$ carrying opposite polarity on the two opposite faces, i.e. $F_1$, $F_2$, in contact with two consecutive cells. These elements are named bipolar plates. Fig. 1B shows the particular case of an electrolyser comprising cells as $C_0$... $C_n$ each one carrying a separator $S_i$ of the electrodic compartments. Electrolysers corresponding to this general type are used in popular industrial processes, such as caustic-chorine production and water electrolysis.

With particular reference to the energy problem, the quantity of electric work to be spent in order to carry out the electrochemical process is higher than the one thermodynamically necessary, due to energy losses in non-reversible phenomena; the electrical current dispersion along the electrolyte feeding and discharge piping, sometime also a source of localized corrosion of the electrolysis equipment, the voltage drop across the elettrolyte and the separator, the presence of gas bubbles between the electrodes, the ohmic drops due to the current flow throughout the structure of the cells themselves are important causes of energy losses, essentially depending on the cell configuration. Other losses, by contrast, are independent of the cell geometry, depending on the nature of the electrodic surfaces in relation to the specific electrochemical process: their amount is measured by the so-called electrode overvoltage. A very important factor about their reduction is the chance the electrolysis cells have to operate at relatively high temperature. At the present time the commercial cells are limited in their operating temperature by the presence of parts made of materials which are not able to resist at higher temperatures. Operation at high temperature is furthermore connected to the possibility of functioning at superatmospheric pressure, to prevent the liquid electrolysis from boiling, or at least to restrict their evaporation. The commercial cells offer only limited possibilities to operate under pressure.

The current losses throughout the liquid connections with the external circuits would be reduced by minimizing the cross section of the liquids' distribution ducts, requiring an increase of pressure drop not applicable to all the electrolysers where the electrolyte circulation is effected by thermosiphon procedures. The reduction of the gas ducts' cross section requires in turn the reduction of the specific volume of the gaseous phase, which means operating under pressure, with the abovementioned limitations.

The energy losses due to the D.C. crossing the electrolyte flow can be lowered by shortening, as far as possible, the mutual distance between the electrodes. Almost all commercial electrolysers carry electrodes at a distance from a few millimeters up to some centimeters from each other. The reciprocal location of the electrodes gives problems for their parallelism which are difficult to solve, particularly if the electrodic surface is large. Lack of parallelism causes higher current flows where the distances are short, with local increases in current density and consequent extra losses of energy due to the excessive overvoltage and ohmic drop. Moving the electrodes closer to the separator tends furthermore to trap the gases evolved by the electrochemical reaction between the electrodes and the separator, thereby interrupting the electrical

2

current flow.

The general lack of design simplicity must be added to all abovementioned limitations of commercial electrolysers. This means higher costs, difficult access to the various parts, assembling and disassembling, replacement of worn out elements such as separators, or the electrodes to be catalytically regenerated, peripheral gas- and liquid-tight cells for atmospheric pressure operation.

Finally, the limited usable current density necessitates extended electrodic surfaces, with resulting high costs and large horizontal and vertical size of the electrolysis equipment.

## ABSTRACT OF THE DISCLOSURE

First aim of this invention is to provide electrolytic cells without the said drawbacks and which are useful in many electrochemical industrial processes and have the fundamental characteristics of design simplicity, high energy efficiency, minimal current losses throughout the liquid connections, performance at high current density, possibility of pressure operation, use of relatively high temperature with respect to the usual levels of the non-metallurgical processes, extreme compactness, possibility to be assembled in different configurations depending on the specific electrochemical process to be performed, possibility of accepting separators of different nature as conventional diaphragms, ionically active membranes or even systems carrying a solid polymeric electrolyte, use of a wide range of construction materials and consequent acceptance of either alkaline or acid electrolytes at various concentrations, maximum limitation of the parts under high voltage capable of coming in contact with the operator.

Also subject of this invention is any assembly of said cells, where they are grouped, in the various possible configurations, in order to make up electrolysis apparatuses that we will generally indicate as electrolysers.

The final subject of this invention is the equipment constituting the best system to guarantee the correct use of said cells and of the electrolysers made up by assembling many cells, following the directions given here below.

These and other goals are obtained using apparatuses as detailed in the beginning of this description, but having bipolar elements with structural characteristics as detailed in the Claim 1. In between these elements, separating elements may be inserted with characteristics as described in the Claim 2., while between each bipolar element and separating element an electrodic structure may be inserted, having characteristics as explained in the Claims 4-6.

## DESCRIPTION OF THE INVENTION

The various aspects and advantages of the invention will better show up from the description of the fulfilment (preferred but not obligatory) forms, as represented in the figures, where:
- Fig. 2 and 3 are schematic and partial views respectively of a bipolar element and of a separating element according to the invention.
- Fig. 4 and 5 are sections of electrolysers.
- Fig. 6A and 6B are front views of electrodic structures and Fig. 6C is a cross section of the same.

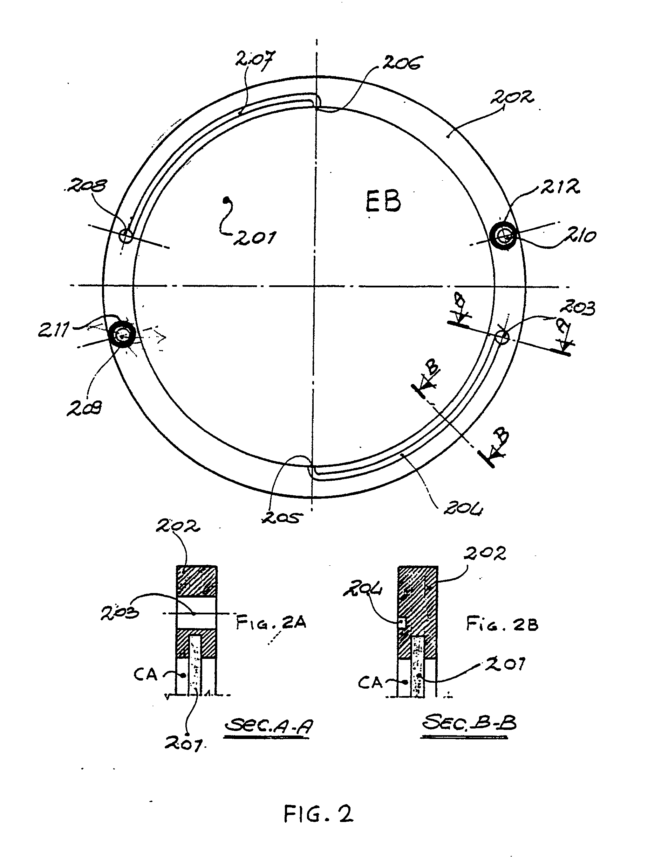

- Fig. 2A and 2B are the sections A-A and B-B of Fig. 2.

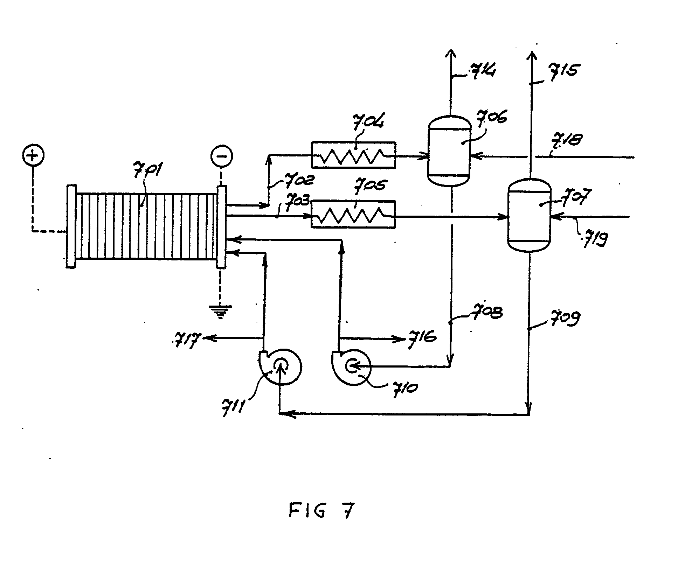

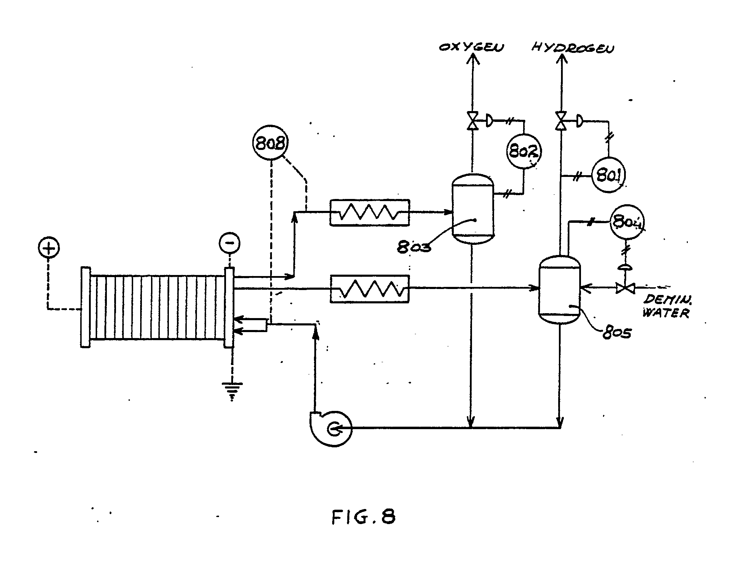

- Fig. 7 and 8 are process flow sheets.

The components of the electrolysis cells according to the invention are represented by bipolar elements, separating elements and electrodic structures, each one having a critical configuration.

A typical bipolar element EB is shown in Figs. 2. It consists of a plate or membrane 201 impervious to gas and liquids, made of electrically conductive material, surrounded by a frame 202 made of electrically insulating material and of one piece with it. The frame is made of technopolimer or resinous material, molded or formed according to the usual techniques of injection or compression molding or similar. The shape may be polygonal or elliptical, but preferably circular as in the figure, thus allowing the cell to function in conditions of elevated internal fluid pressure.

The hole 203 is part of the electrolyte feeding header and, as shown in Fig. 2A (section A-A of Fig. 2) it crosses the full thickness of the electrically insulating material constituting the frame 202, having for this reason its axis normal to the plate 201. The electrolyte flows in the feeding channel 204, which extends itself on a circular position and is entirely located into the surface of 202. The electrolyte enters through the port 205 into the cavity CA, having the plate 201 as bottom and the thickness of the frame 202 as wall. Said cavity CA is located, with respect to the plate itself, at the observer side. The electrolyte is distributed throughout all the available space.

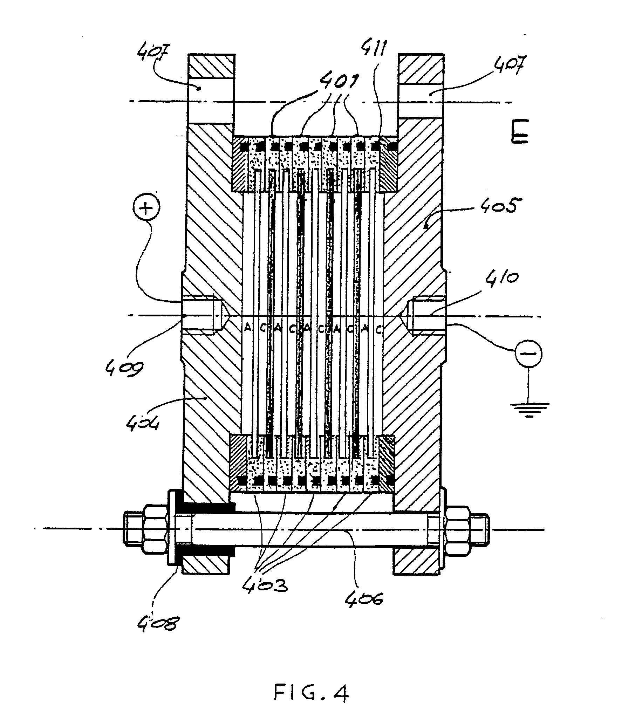

The mixture of gases and liquids constituting the product of the electrochemical reactions taking place

3

in said cavity between plate and frame enters the opening 206 of the discharging channel 207, which is preferably of the same nature and extension as 204, in order to reach the hole 208, part of the header designed to discharge the products. The electrolyte inlet and the product outlet 206 from CA should be in diametrically opposite positions. The same is true of the inlet 203 and the exit 208 from the frame 202 on which a peripheral gasket 411 (fig. 4) is disposed to make a pressure tight joint between adjacent frames when said frames are stacked against one another.

The holes 209 and 210, of the same nature as 203 and 208, are elements of headers for the distribution of fluids and have no connection with the cell cavity CA. Their purpose will be explained later. These holes must not be breached by the fluids contained in the cavity and are protected by gaskets 211 and 212.

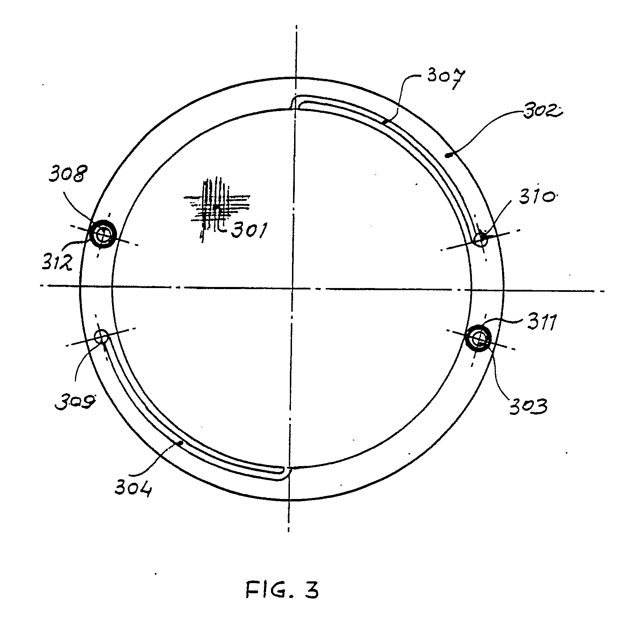

Fig. 3 (to be read in analogy to Fig. 2) shows a separating element, designed to separate the anodic from the cathodic compartment of each cell, whenever this is necessary for a specific electrochemical process. The separator is a porous diaphragm 301, whose peripheral zone is incorporated in an electrically insulating frame 302. As for the bipolar element frame of Fig. 2, the frame of the separating element is also made of technopolymer or resinous materials, resistant to the contained fluids in the operating conditions of the electrolytic process.

The hole 309 is an element of the header feeding the electrolyte. This flows along the feeding channel 304 and reaches the cavity delimited by the diaphragm or membrane surface 301, (constituting the bottom of the cavity) and by the thickness of the frame 302. The electrolysis products are removed from the same cavity through the discharging channel 307 and the hole 310. As in the case of the bipolar element EB of Fig. 2, the holes and the channels are entirely incorporated in the body of the polymer material constituting the frame 302. The holes 303 and 308 are surrounded by the gaskets 311 and 312.

The shape of the frames of the bipolar elements 202 and of the separating elements 302 must be congruent, to allow fitting of said elements. Let us consider for instance the cellular structure obtainable by coupling alternatively bipolar and separating elements, following the order described in Fig. 4 where, as a demonstration of the principle, four bipolar elements are shown, item 401, alternatively fitted with five separating elements, here indicated as 403, kept in position by two terminal covers 404 and 405 through the action of tie rods or similar devices 406 passing through holes as 407 of said covers.

In direct comparison with Fig. 1B, the apparatus of Fig. 4, according to this invention, ha s the configuration of a bipolar electrolyser with cells holding a separator. In the practical realization of Fig. 4 the tie rods 406 must be electrically insulated with respect to one of the two covers at least, if these are metallic. This may be obtained by means of an insulating lining or, as shown in Fig. 4, by inserting insulating bushes as 408 between cover and tie rods. In such a case the DC feeding connectors are put in contact with the terminal covers making use, for instance, of screws introduced in screwed holes as 409 and 410. This way a voltage is applied to the covers, having a value proportional to the number of bipolar 401 and separating 403 elements existing between them. The electrical insulation of the tie rods prevents short circuiting between the terminal covers, making the total DC flow throughout the cell system.

In a preferred form of the invention the tie rods 406 are electrically insulated with respect to the cover 404, connected to the positive pole of the DC generator. This cover, as a result, ia polarized anodically, i.e. takes away electrons from the electrolysis system. The cover 405, on the contrary, polarized negatively or cathodically, is the electron supplier to the system. This cover should be grounded so that it assumes the corresponding ground potential.

The peripheral impermeability to liquids and gases present in the cells because of the electrochemical process is obtained by inserting gaskets between the alternate elements 401 and 403 and between the terminal elements and the covers 404 and 405. This impermeability is guaranteed by circumferential elements in the form of an O-ring as 411, situated in appropriate seats.

With reference to Fig. 4, being the cover 404 anodically polarized, the space between this cover and the first separator 403 constitutes an electrolysis anodic half-cell. For this reason it is identified in Fig. 4 by the letter A. The next half-cell, contained between the separator 403 and the bipolar plate 402 and identified by C is cathodically polarized. The sum of these two half-cells constitutes the first electrolysis cell belonging to the electrolyser E. The repetition of alternate half-cells as in Fig. 4 makes up the bipolar configuration already shown in Fig. 1B, up to the point where an end cathodic half-cell C is in contact with the cover 405, cathodically polarized.

As to fluid distribution inside the electrolysis apparatus as described, the alternation of bipolar elements 401 with separating elements 403 and the congruence of their geometry create, in the assembly of their frames (202, 203), a system of headers. In particular the electrolyte is fed to the half-cells C by the header obtained by the alignment of the holes as 203 in Fig. 2 to the holes as 303 in Fig. 3. The electrolyte is fed to the A half-cells by the header obtained by the alignment of the holes as 209 in Fig. 2 and as 309 in Fig. 3. The electrolyte is then fed to the electrolyser E by means of two nozzles or holes made in a terminal

4

cover, the cathodic cover 405 in the preferred version of the invention. Similarly, the electrolysis products are removed from the half-cells A by the header made up by the alignment of the holes as 310 in Fig. 3 to the holes as 210 in Fig. 2. From the half-cells C by the header obtained by the alignment of the holes as 208 in Fig. 2 to the holes as 308 in Fig.3. The products are then extracted from E by means of two separate nozzles or holes made in a terminal cover, preferably the cathodic one. Thus the electrolyser consisting of many cells has a header for the distribution of the electrolyte to the half-cells polarized with the same sign, a header feeding the electrolyte to the half-cells polarized with the opposite sign, two headers designed to separately remove the products coming from half-cells of equivalent polarization. These four headers end in four nozzles or holes located on one of the terminal covers, preferably the cathodically polarized cover and, as explained above, preferably grounded.

The great flexibility of such cell system in terms of possibilities of arrangement is further demonstrated by the chance of assembling electrolysis apparatuses consisting of bipolar cells having more than a single separator, even if each of them has different nature, as useful in very special processes. In this case the frames need a larger number of holes and feeding-discharging channels than in the examples of Fig. 2 and 3, which may be defined in detail case by case, as obvious extrapolation of what has been described above.

In relation to the described configuration of bipolar electrolysers with separator, we have stated in an implicit way that the bipolar plate, as 201 in Fig. 2, constituting the only electrically conductive item of the bipolar elements, shall be the actual electrodes of any bipolar cell of the series. In fact, both the particular method selected for the distribution and collection of the fluids involved in the electrochemical process and the particular configuration of the bipolar and separating elements allow cells to be assembled with a largely reduced electrodic gap. The bipolar plates may be constructed depending on the electrochemical process to be performed, by materials suited to the particular case and can be further submitted to any surface treatment, in accordance with known technique, in order to ensure electrocatalytic activity.

Better results can be obtained by utilizing critical electrodic structures in accordance with the invention.

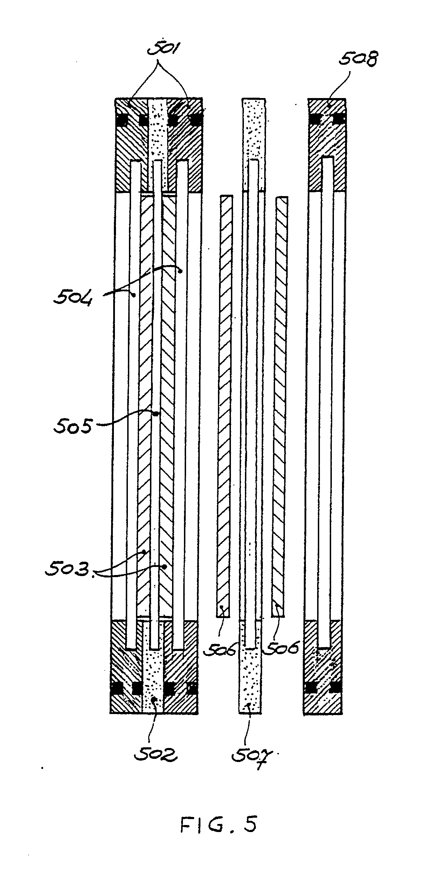

Fig. 4 clearly shows how the coupling in series of bipolar elements 401 with separating elements 403 leaves (inside the electrolyser) spaces to be filled up by the electrolyte, spaces which we have indicated above as anodic (A) and cathodic (C)half-cells. The electrodic structures as per the invention have a configuration capable of filling up completely said spaces or half-cells. Each structure is, in practice, a tri-dimensional electrode conceptually differing from the convention of using in two space dimensions extended electrodes. On the left of Fig. 5 a version is shown, where two bipolar elements 501 are coupled maintaining the separating element 502 in the correct position. 503 is two electrodic structures, inserted between the bipolar plates 504 and the separator 505, filling up this way the consecutive half-cells constituting a single electrolysis cell. On the right of Fig. 5 it is shown the "exploded view" of two analogous electrodic structures 506, a separating element 507 and a bipolar element 508, in order to show separately the various parts constituting the single electrolysis cell.

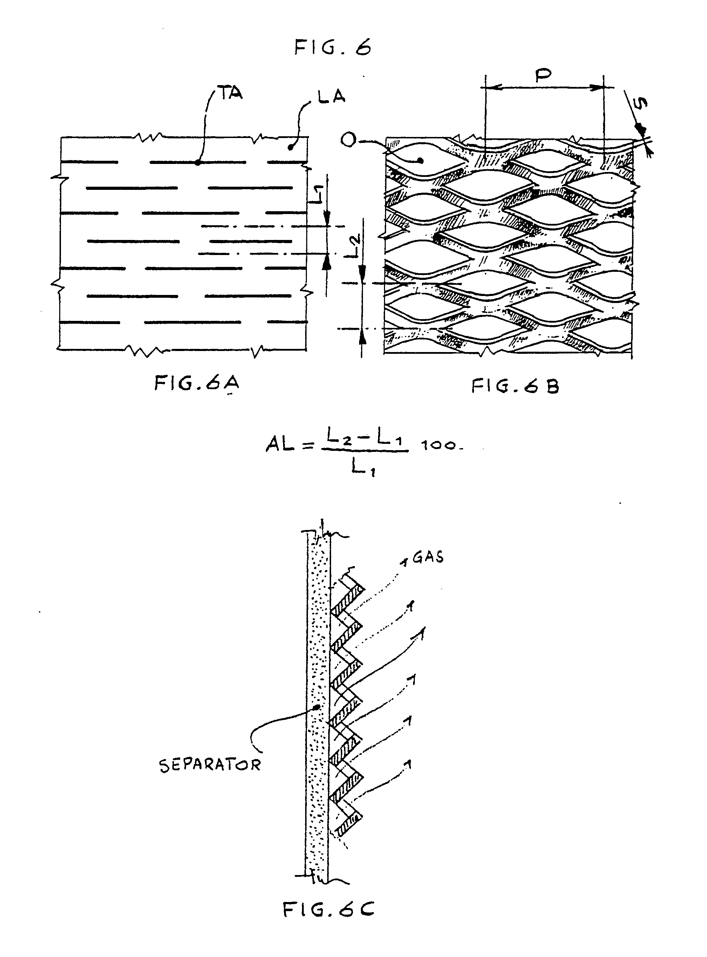

Essential design condition pertaining to said electrodic structure is the ability to conduct the electrical current from the bipolar plates to the proximity of the separators, allowing the electrolysis products, as generated in the body of the structures themselves, to leave easily the generation sites, and allowing the electrolyte to have access to said sites. The first condition requires an electrical continuity between each bipolar plate and the parent electrodic structure, which can be obtained by coupling them by screws or weldings or, in the preferred version of the invention, by simple pressure of the electrodic structure onto the bipolar plate. The second condition is effective when the structures are geometric solids having high internal porosity, obtained starting from metallic or electrically conductive materials having a large surface per unit volume, as for wire in form of fabrics or knit-mesh, strips or nets, thin sheets processed in different ways, granules or other particular material. In a preferred form of the invention every electrodic structure is made of a thin expanded sheet maintained in contact with the separator by several layers of thin wire in form of knit mesh, accumulated to fill up the entire volume available between separator and bipolar plate. In order to give better details, the term "expanded sheet" refers to the manufact obtained by the process illustrated in Fig. 6: a metal sheet LA is cut with cuts TA at full thickness, following a scheme as for instance the one in Fig.6A and then submitted to elongation perpendiculary to the cuts, to induce a deformation due to the stretching to a final eyelets-O configuration similar to the one shown as example in Fig. 6B, where P is the cross pitch of the cuts, S the sheet thickness, $AL = (L_2 - L_1) \, 100/L_1$ the percentual elongation of the sheet due to the stretching.

Installing the expanded sheets into the cell, care must be taken to lay the cuts horizontally, in such a way that the orientation of the holes O promotes removal of the gases from the separator, as shown in the cross section of Fig. 6C, where the arrows indicate the gas flow direction through the holes O.

In an alternative construction the electrodic structure is a compound of thin expanded sheets, sandwiched with thin wire mesh. In a further form the structure has been obtained by pressing bulk wires to give the mass the shape corresponding to the half-cell to be filled up.

The electrodic structures, finally, can be conveniently submitted to conventional treatments for the activation of their surface, assuming this way electrocatalytic characteristics.

The introduction of such electrodic structures in electrolysers set up by assembling bipolar and separating elements following the invention, permits the use of high current densities, without loss of voltage or energy efficiency of the electrolysis system.

Every electrolyser, when constructed in accordance with the directions of this invention, is particularly useful for operating at super-atmospheric pressure, thus permitting electrolysis in a wide temperature range, including temperatures above the atmospheric boiling point of many aqueous electrolytes. Operation under pressure, by reducing the specific volume of the gaseous products, allows use of cells of minimal thickness, smaller than the current state of the art. It also makes it possible to obtain gaseous products already compressed, which is very useful for many applications. It finally makes it possible to minimize the cross section of the electrolyte feeding and product discharge channles; the dispersed electric current is thus negligible, because said channels have non-conductive walls and may have a relatively long path. In this way a current efficiency is obtained which is very close to 100% in case of absence of secondary electrochemical reactions, as in the case, for instance, in water electrolysis.

In relation to the construction materials for the various components of the electrolyser in this invention, we give here below as an example (not to be understood as a limitation), a list of polymeric materials usable for molding the frames of the bipolar and of the separating elements, with reference to some typical industrial processes. It is obvious that the polymeric materials listed here below can be reinforced, when possible and following the directions of the specialists, with chemically inert substances, in order to make them mechanically more resistant, as for instance asbestos fibers, glass fibers or powder, mineral fillers.

| Polymeric materials for frame molding | Electrolysis process | | |
|---|---|---|---|
| | water electrolysis | | sodium chloride electrolysis in aqueous solution |
| | alkaline | acid | |
| acetalic copolymers | yes | | |
| acrylic polymers | | | yes |
| ABS | yes | yes | yes |
| epoxy resins | yes | | yes |
| nylons 11 and 12 | yes | | |
| polyester resins | | yes | |
| poly (4-methyl pentene-1) | yes | yes | yes |
| polypropylene | yes | yes | yes |
| polyphenylene oxide (PPO) | yes | yes | yes |
| polysulfones | yes | yes | yes |
| PTFE | yes | yes | yes |
| polythene | yes | yes | yes |
| PVC | yes | yes | yes |
| acrylonitrile-styrene (SAN) | yes | | |
| chlorinated polyether | yes | | |
| furanic resins | yes | yes | yes |
| ebanite | yes | yes | yes |
| polyphenylene sulphide (PPS) | yes | yes | yes |
| polyvinylidene fluoride (PVDF) | | yes | |

As for electrically conductive items, e.g. the covers, the bipolar plates and the electrodic structures, they must withstand the attack of the fluids present inside the electrolyser in polarization conditions. The A-type half-cells in Fig. 4 must be made of materials which we briefly indicate as "anodic", the C-type half-cells in materials which we indicate as "cathodic". One of the big advantages of the electrolyser in this invention is its surprising design simplicity, which makes it feasible with a large number of conductive materials even if they are not machined easily. As an example, but with no limitation in that sense for the invention, we list here below materials usable in typical electrolytic processes.

| | Electrolysis process | | |
|---|---|---|---|
| **Conductive materials** | **water electrolysis** | | **sodium chloride electrolysis in aqueous solution** |
| | **alkaline** | **acid** | |
| **(A) Anodic materials:** | | | |
| nickel alloys | yes | | |
| pure nickel | yes | | |
| nickel plated carbon steel | yes | | |
| silicon iron | | yes | |
| Fe-Cr-Ni-Mo alloys | | yes | |
| graphite | | yes | yes |
| graphite reinforced resins | | yes | |
| amorphous carbon | | yes | |
| titanium | | | yes |
| **(C) Cathodic materials:** | | | |
| carbon steel | yes | | yes |
| stainless steel | yes | | yes |
| nickel plated carbon steel | yes | | yes |
| nickel alloys | yes | | yes |
| pure nickel | yes | | yes |
| zirconium | | yes | |
| tantalum | | yes | |
| silicon iron | | yes | |
| Fe-Cr-Ni-Mo alloys | | yes | |
| graphite | | yes | |

As for the terminal covers, in particular, they may be advantageously constructed in carbon steel, lined with cathodic or anodic material only in the part in contact with the electrolyte. The bipolar plates, in turn, may be constructed using a single material, when this can withstand both anodic and cathodic conditions. In other cases they may be in lined or plated material in order to satisfy both conditions.

The separators are simply state of the art, as for instance asbestos paper, board, felt or fabrics, PVC fabrics, ionically active membranes. Following this conception, the electrolyser can accept, in the position of separator, ionically active membranes covered on both sides by electrocatalytic materials, as required by the recent technologies using solid polymeric electrolytes.

The invention is completed with the configuration of a system of auxiliary equipment which will obtain (from the described electrolyser) the best performance in electrochemical processes conduction. As is shown for the most general case in the flow diagram of Fig. 7, the electrolyser 701 is fed with direct current, taking care to ground the cathodic terminal cover. In this way all the equipment and metal piping electrically connected with said cover is equipotential and grounded. The lines 702 and 703, provided to extract the electrolysis products coming from the anodic and respectively cathodic half-cells, feed the same products to the respective coolers 704 and 705; their purpose is to maintain (at the desidered temperature) the electrolyte circulating in the system. The electrolysis products then reach the vessels 706 and 707, where the gaseous products are separated from the electrolytes which in turn, making use of the lines 708 and 709, are fed to the suction pumps 710 and 711.

The pumps send back the electrolytes to the electrolyser. The gaseous electrolysis products leave the system by means of the lines 714 and 715, the liquid products through the lines 716 and 717. The feedstock solutions for the electrolysis process are fed to the system through the nozzles 718 and 719.

Case by case, as shown later, control and measurement devices can be installed, as required by the supervision of the specific process.

The following examples (not exhaustive) regard practical applications of this invention. They are given in order to better show its usefulness, the novelty and the surprising results.

EXAMPLES

Example 1

An electrolyser made of 20 diaphragm cells was assembled by using 20 separating elements and 19 bipolar elements, put alternatively in series and held between two terminal stainless steel covers. The electrolyser configuration corresponded then to the illustration in Fig. 4. The separators were asbestos fabrics of 2 mm thickness. The bipolar plates were pure nickel of 0.2 mm thickness. The frames were made in injection molded polypropylene, asbestos fibers reinforced. The anodic cover was nickel-plated on the surface in contact with the electrolyte for a 20 mm thickness. The electrodic structures, having a cross section of 80 cm$^2$, were 3 mm thick, obtained by packing a pure nickel sheet with S = 0.2 mm, expanded with pitch P = 2 mm and elongation A = 60%, with 4 layers of nickel knit mesh, wire diameter 0.06 mm. The assembling of the structures was such that the expanded sheet was in contact with the asbestos diaphragm and the electrical continuity between bipolar plates and electrodic structures was guaranteed by the pressure exerted between each other. The electrodic structures were not electrocatalytically activated.

Said electrolyser was used to perform water electrolysis, installed in a plant system similar to the general flow diagram of Fig. 7, but simplified for this particular case where a single electrolyte is circulated: in this case, in fact, there was only one circulation pump.

The electrolyte was an aqueos solution of KOH at 25% strength.

The behaviour of the cells was tested at various temperatures and at 0.5 bar pressure. We list here below the measurements at 40, 60, 80°C :

| Temperature (°C) | Current (A) | Current density (A/cm$^2$) | D.C.voltage (V) | Cell voltage (V) |
|---|---|---|---|---|
| 40 | 16 | 0.20 | 39.0 | 1.95 |
|  | 24 | 0.30 | 42.2 | 2.11 |
|  | 32 | 0.40 | 43.8 | 2.19 |
| 60 | 20 | 0.25 | 38.4 | 1.92 |
|  | 25 | 0.32 | 40.0 | 2.00 |
|  | 30 | 0.38 | 48.0 | 2.40 |
| 80 | 12 | 0.15 | 33.8 | 1.69 |
|  | 20 | 0.25 | 36.0 | 1.80 |
|  | 24 | 0.30 | 37.0 | 1.85 |
|  | 32 | 0.40 | 38.4 | 1.92 |

We would like to stress that the cell efficiency, calculated as the ratio between the thermodynamic reversible voltage (1.48 V) and the above cell voltage at 80°C is in the range of 77% (at 0.4 A/cm$^2$) to 87.5% (at 0.15 A/cm$^2$). The technical literature shows that, in the same conditions, the efficiency of commercial (non activated) cells (state of the art) is of the order of 62 to 72%. The improvement due to the invention is evidently substantial.

Example 2

An electrolyser comprising 125 cells, set up by alternating elements with 124 bipolar elements was prepared to produce hydrogen and oxygen by water electrolysis. The bipolar elements were 328 mm in outside diameter and were constructed using nickel-plated carbon steel discs, 1 mm thick, surrounded by a frame 24 mm wide and 7 mm thick. The frame was prepared by injection molding of polyphenyleneoxide (PPO) with holes of 12 mm diameter either for electrolyte feeding or the discharge of the electrolysis products.

The separating elements were 2 mm thick asbestos board, surrounded by frames of the same material and diameter as for the bipolar elements. They were smaller in thickness, say 4 mm. The electrolyte feeding channels and the electrolysis product discharge channels had a rectangular cross section of 3 by 1.5 mm and 200 mm in length each.

Every electrolysis half-cell contained an electrodic structure of 600 cm² circular section, assembled by packing alternately sheets 0.3 mm thick, expanded to obtain a 2.5 mm pitch and 60% elongation with metal wire knit mesh. Every electrodic structure comprised three expanded sheets alternating with double layers of knit mesh. Expanded sheets and knit mesh were in pure nickel for the anodic half-cells, in nickel-plated carbon steel for the cathodic ones. Before the assembling of the electrolyser, the structures were submitted to activation, following a known procedure long in use in water electrolysis technology, based on the galvanic deposition of nickel sulphide from a thiosulphate bath onto the nickel-plated carbon steel structure and superficial anodic attack of the anodic nickel structure, in the same bath.

The electrolyser assembling proceeded then by inserting all the elements as necessary to set up the 125 bipolar cells between two terminal covers in nickel-plated carbon steel, connected to each other by 8 tie rods of 12 mm diameter, electrically insulated with respect to the anodically polarized cover. The cover connected with the cathodic termination was grounded.

The electrolyser was provided with nozzles for the electrolyte feeding to the anodic and cathodic half-cells and for the discharge of the electrolysis products from the half-cells having the same polarization sign. The electrolyte was an aqueous solution of potassium hydroxide of 26% strength b.w.

The plant system used to operate the electrolyser is shown in Fig. 8, where the main control instruments are also schematically indicated, e.g. the pressure controller 801, maintaining the internal pressure of the system at 5 bar by acting on the hydrogen stream; the level controller 802 of the liquid in the vessel 803, acting on the oxygen stream; the liquid level controller 804 for the vessel 805, acting on the demineralized water feed; the recorder 808 of the inlet and outlet temperature of the electrolyte from the cell system.

After starting up the electrolyte circulation and after gradually raising the D.C. flow up to 100 A, the electrolyte heating was continued, while the system was stabilizing itself in the operation parameters, i.e. pressure and liquid levels. At a temperature of 70°C, measured in the electrolysis products, the D.C. voltage amounted to 204 V.

After increasing the D.C. flow up to 125 A, the temperature was progressively raised to 80° C. This temperature was maintained by acting on the electrolyte cooling, further increasing step by step the D.C. flow and taking note of the following running data :

| D.C. current | | D.C. voltage | |
|---|---|---|---|
| 125 | A | 203 | V |
| 180 | A | 210 | V |
| 250 | A | 218 | V |
| 300 | A | 223 | V |

Taking into account the cross section of the electrodic structure in the calculation of the current density, the following values are obtained :

| Current density (A/m²) | Cell voltage (V) | Voltage efficiency (ref. 1.48 V) (%) |
|---|---|---|
| 2080 | 1.62 | 91 |
| 3000 | 1.68 | 88 |
| 4160 | 1.74 | 85 |
| 5000 | 1.78 | 83 |

The above values give efficiencies undoubtedly higher than the ones found with commercial state of the art cells.

It is finally interesting to note that the total length of the 125 cell electrolysers was only 1580 mm, including the terminal covers, demonstrating the important construction compactness.

Example 3

A further interesting point of this invention is the minimization of current dispersion through the fluid feed and discharge pipes, as shown in the following example.

An electrolyser designed to perform the same electrolysis process as in the preceding examples was assembled making use of 63 cells of the configuration already described. The diameter of the electrodic structures was, in this case, 800 mm. The electrolyte feeding and discharge channels had a cross section of 28.2 mm and a length of 560 mm each, being totally contained in the frames of the bipolar and separating elements.

Clearly, every expert in this kind of problem can calculate that an electrolyte feeding channel of said dimensions, having non-conductive walls, corresponds to a resistor of 220 Ohm at an operating temperature of 40°C. An electrolysis discharge channel, assuming the total absence of gaseous phase (which is an extremely conservative position) corresponds in turn to a resistor of 120 Ohm at 90°C. Forgetting the electrical resistance of the fluids headers and recalling that each cell owns two feeding and two discharging channels, it can be calculated that the maximum amount of the dispersed current is

$$I_d = 2 \; V_c \; ( \; 1/220 \; + \; 1/120 \; ) \; \frac{n \; ( \; n \; + \; 1 \; )}{2}$$

where $V_c$ is the average cell voltage and $n$ the total number of cells constituting the electrolyser.

In this example, by feeding the electrolyser with a D.C. of 2000 A, the total voltage amounted to 111 V, corresponding to an average cell voltage of 1.76 V.

From the preceding equation we get $I_d$ = 91.5 A.

The total D.C. used in the electrochemical process is 2000 (63) = 126,000 A, the minimum current efficiency of the system is calculated as 99.93%, undoubtedly higher that the experimental values of the known commercial electrolysers.

Example 4

An electrolyser identical to the one described in Example 2 was designed for an operating pressure of 30 bar. In view of that the frames of the bipolar and separating elements were molded making use of polyphenylene sulphide (PPS), a polymer having a high mechanical resistance characteristics and capable of withstanding the fluid phases in electrolysis conditions. The apparatus was operated at 90°C, in conditions equivalent to what was described in Example 2.

A demonstration run was performed for a relatively long time, feeding to the electrolyser a constant D.C. of 240 A, i.e. a current density of 4000 A/m². In fairly stable conditions, the voltage across the electrolyser was 210 V, equivalent to an average cell voltage of 1.68 V, not taking into account the eventual voltage drops of the external circuit. This means a voltage efficiecy of 88%. Applying the formula given in Example 3 to the configuration of the present cells, the current efficiency is calculated to be higher than 99.6%. The energy efficiency of the electrolyser, in the selected operating conditions, is higher than 87.6%, with a specific consumption of 4.04 kWhr/Nm³ of produced hydrogen.

**Claims**

1. Apparatus for the electrolysis of a solution, comprising at least a sequence of two or more bipolar elements (EB) stacked together between two terminal covers, said bipolar element (EB) comprising a frame of insulating material, a plate of conductive material inserted in said frame and an electrolyte inlet and outlet characterized in that

   said plate is fitted along it's whole pariphery in the frame, which is relatively thicker than the conductive plate in such a way as to form at both sides of said plate two cavities (CA) for the electrolyte, each cavity (CA) being defined by the plate itself and by the peripheral protrusion of the surrounding frame, said frame comprising a hole as part of the electrolyte feeding header and crossing the full thickness of the frame, having it's axis normal to the plate, the hole being connected with an electrolyte feeding channel located into the surface of the frame as a groove and extending on a part of one of the two

EP 0 212 240 B1

peripheral faces of the frame, said feeding channel entering through a point hole into a cavity (CA), the frame further comprising an electrolyte outlet hole connected with said cavity and an electrolyte outlet channel of the same nature as the feeding channel, the outlet channel ending in an outlet hole forming a part of the electrolyte discharge header and being of the same nature as the hole of the electrolyte feeding header, a peripheral gasket in form of a ring being arranged on said faces, so as to make a pressure tight joint between a bipolar element (EB) and an adjacent separating element disposed between each pair of consecutive bipolar element, and two further gaskets being arranged around holes representing elements of headers for the distribution of fluids and having no connection with said cell cavity (CA).

2. Apparatus following Claim 1, characterized by the fact that the separating elements consist of a porous diaphragm or membrane whose peripheral zone is fitted into an electrically insulating frame, also carrying an electrolyte feeding channel leading into the cavity bound by said diaphragm or membrane, and the part of said frame jutting out with respect to the diaphragm or membrane; a discharging channel for the removal of the electrolysis products from the cavity; a peripheral gasket, so as to make a pressure-tight joint with the next-neighbour bipolar element's frame, with which said separating element's frame comes in whole mutual contact by deformation of said gasket; two further gaskets, so as to protect holes for the electrolyte feeding discharging header from electrolyte and electrolysis products escaping.

3. Apparatus according to Claims 1 and 2, characterized by the fact that the frames of the bipolar and separating elements have a congruent structure, to allow mutual coupling (by overlap), in particular the holes for the electrolyte feeding and discharging header of the bipolar elements (EB) result aligned respectively with corresponding holes of said separating element, said bipolar elements being stacked together and in alternance with separating elements in such a way that the orientation of all elements is constantly with all surface grooved by channels oriented in the same direction.

4. Apparatus according to Claims 1 and 2, characterized by the fact that said bipolar and separating elements are maintained in alignment by insulated (or provided with insulating bushes) tie rods, extending between terminal covers connected with the poles of a D.C. source and provided with nozzles, with gaskets and interposed between the peripheral parts of the bipolar and separating elements and between the terminal elments of the series and the covers.

5. Apparatus according to Claim 4, characterized in that said electrodic structure is made from a thin, cut, and expanded metal sheet maintained in contact with the separator by layers of metal knit mesh.

6. Apparatus according to Claim 5, wherein the metal sheet is horizontally cut and expanded in such a way to form holes for improving the removal of any gaseous phase from said separator.

**Revendications**

1. Dispositif pour l'électrolyse de solutions, comprenant au moins une séquence d'au moins deux éléments bipolaires (EB) empilés entre deux couvercles terminaux, chaque élément (EB) comportant un cadre (202) de matériel isolant, une plaque de matériel conducteur inserée dans ce cadre, et une entrée et sortie de l'electrolyte, characerisé en ce que ladite plaque est inseréé le long de son entière péripherie dans le cadre lequel est relativement plus épais que la plaque conductrice de façon à former sur les deux cotés de ladite plaque deux cavités (CA) pour l'électrolyte, chaque cavité étant définie par la plaque elle-méme et par la saillie périphérique du cadre environnant, ce cadre comprenant un orifice faisant partie de la tête d'alimentation de l'électrolyte et traversant toute l'épaisseur du cadre ayant son axe perpendiculaire à la plaque, l'orifice étant relié à un canal d'alimentation de l'électrolyte qui est placé dans la surface du cadre, a la forme d'une rainure et s'étend sur une partie d'une des deux faces périphériques du cadre, ledit canal d'alimentation rentrant à travers un orifice de debouché dans une cavité (CA), le cadre comprenant en outre un orifice de sortie de l'électrolyte connecté à ladite cavité et un canal de sortie de l'électrolyte de la même nature que le canal d'alimentation, le canal de sortie terminant dans un orifice de sortie qui constitue una partie de la tête de décharge de l'électrolyte et ayant la même structure que l'orifice de la tête d'alimentation de l'électrolyte, une garniture à forme d'anneau étant arrangée sur ladite face, de façon à réalizer un joint étanche entre un élément bipolaire (EB) et un élément séparateur placé entre chaque paire d'éléments bipolaires successifs, et deux

11

ulterieures garnitures etant disposées autour d'orifices représentant des éléments des têtes pour la distribution du fluide et n'ayant aucune connexion avec toutes lesdites cavités (CA).

2. Dispositif d'après la revendication 1, characterisé par le fait que les éléments dé separation consistent d'un diaphragme ou membrane poreuse dont la zone périphérique est inserée dans la plaque éléctriquement isolante, qui presente aussi un canal d'alimentation de l'electrolyte, portant dans la cavité delimitée par ce diaphragme ou membrane et par la partie dudit cadre saillante au delà du diaphragme ou membrane; un canal de décharge pour l'évacuation des produits de l'électrolyse de la cavité; une garniture périphérique capable de faire un joint étanche à pression avec le cadre de l'élément bipolaire voisin, avec lequel ledit cadre d'élément separateur vient en plein contact mutuel par deformation de ladite garniture; deux ulterieures garnitures de façon à protéger les orifices de la tête de décharge contre l'électrolyte et les produits de l'électrolyse echappants en evacuations.

3. Dispositif d'après les rivendications 1 et 2, characterisé par le fait que les cadres des éléments bipolaires et separateurs ont une structure congruente pour consentir un accaupplement mutuel (par superposition), en particulier les orifices des têtes d'alimentation et de décharge des éléments bipolaires (EB) resultent en alignement avec les orifices correspondents dudit élément separateur, lesdits éléments bipolaires étant empilés ensemble et en alternance avec des éléments separateurs de façon que l'orientation de tous les éléments soit constament assurée sur toute la surface cannelée par des canaux orientés dans la même direction.

4. Dispositif d'après les rivendication 1 et 2, characterisé par le fait que lesdits éléments bipolaires et separateurs sont maintenus en enlignement par des tirants isolés (ou pourvus de douilles isolantes) qui s'etendent entre les couvercles terminaux reliés aux pôles d'une source de tension continue et pourvus d'orifices et de garnitures et interposés entre les parties périphériques des éléments bipolaires et separateurs et entre les éléments terminaux des series et des couvercles.

5. Dispositif d'après la revendication 4, characterisé en ce que ladite structure électrodique est faite à partir d'une mince tôle metallique coupée et etirée maintenue en contact avec le separateur par des couches d'un réseau metallique à mailles.

6. Dispositif d'après la revendication 5, dans lequel la tôle metallique est horizontalement coupée et etirée de façon à former des orifices pour ameliorer l'évacuation de toute phase gaseuse dudit separateur.

**Patentansprüche**

1. Vorrichtung für die Elektrolyse einer Lösung mit wenigstens einer Reihe von zwei oder mehreren bipolaren Elementen (EB), die zwischen zwei Endabdeckungen zusammengesetzt sind, wobei das bipolare Element (EB) einen Rahmen aus isolierendem Material, eine Platte aus leitendem Material, die in den Rahmen eingesetzt ist, und einen Elektrolyteinlaß und -auslaß aufweist, dadurch gekennzeichnet, daß die Platte entlang ihres ganzen Umfangs in den Rahmen eingebaut ist, welcher in solcher Weise relativ dicker als die leitende Platte ist, daß zwei Hohlräume (CA) für den Elektrolyten an beiden Seiten der Platte gebildet werden, wobei jeder Hohlraum (CA) von der Platte selbst und von dem peripheren Vorsprung des umgebenden Rahmens begrenzt ist, der Rahmen eine Öffnung aufweist, welche Teil des Elektrolytzuführverteilers ist und die ganze Dicke des Rahmens durchquert, wobei sie eine zur Platte senkrechte Achse hat, die Öffnung mit einem Elektrolytzuführkanal verbunden ist, der in der Oberfläche des Rahmens als eine Nut positioniert ist und sich auf einem Teil einer der zwei Umfangsflächen des Rahmens erstreckt, der Zuführkanal in einen Hohlraum (CA) durch eine Mündungsöffnung eintritt, der Rahmen ferner eine Elektrolytauslaßöffnung aufweist, welche mit dem Hohlraum und einem Elektrolytauslaßkanal derselben Art wie der Zuführkanal verbunden ist, der Auslaßkanal in einer Auslaßöffnung endet, die einen Teil des Elektrolytabführsammlers bildet und von der gleichen Art wie die Öffnung des Elektrolytzuführverteilers ist, eine Umfangsdichtung in Form eines O-Rings auf den Flächen angeordnet ist, so daß eine druckdichte Verbindung zwischen einem bipolaren Element (EB) und einem angrenzenden Trennelement hergestellt wird, das zwischen jedem Paar aufeinanderfolgender bipolarer Elemente angeordnet ist, und zwei weitere Dichtungen um Öffnungen herum angeordnet sind, die Verteilerelemente für die Verteilung von Fluiden bilden und keine Verbindung mit den Zellhohlräumen (CA) haben.

2. Vorrichtung nach Anspruch 1, dadurch gekennzeichnet, daß die Trennelemente aus einem porösen Diaphragma oder einer porösen Membran bestehen, dessen bzw. deren Umfangszone in einem elektrisch isolierenden Rahmen eingepaßt ist, der auch einen Elektrolytzuführkanal, der in den Hohlraum führt, welcher von dem Diaphragma oder der Membran und von dem bezüglich des Diaphragmas oder der Membran vorstehenden Rahmenteil begrenzt ist, einen Abführkanal zum Entfernen der Elektrolyseprodukte aus dem Hohlraum, eine Umfangsdichtung zur Herstellung einer druckdichten Verbindung mit dem nächst-benachbarten Bipolarelementrahmen, mit welchem der Trennelementrahmen durch Verformung der Dichtung in vollen gegenseitigen Kontakt kommt, und zwei weitere Dichtungen trägt, um Öffnungen für den Elektrolytzuführverteiler und den Elektrolytabführsammler vor entweichenden Elektrolyt- und Elektrolyseprodukten zu schützen.

3. Vorrichtung nach Anspruch 1 und 2, dadurch gekennzeichnet, daß die Rahmen der bipolaren Elemente und der Trennelemente einen kongruenten Aufbau haben, um eine gegenseitige Kupplung (durch Überlappen) zu ermöglichen, wobei insbesondere die Öffnungen für den Elektrolytzuführverteiler und den -abführsammler der bipolaren Elemente (EB) sich als jeweils fluchtend ausgerichtet zu den entsprechenden Öffnungen der Trennelemente erweisen und die bipolaren Elemente miteinander und abwechselnd mit Trennelementen so zusammengesetzt sind, daß die Ausrichtung aller Elemente zur gesamten Oberfläche, die mit nutenförmigen Kanälen versehen ist, die in der gleichen Richtung ausgerichtet sind, gleichbleibend ist.

4. Vorrichtung nach Anspruch 1 und 2, dadurch gekennzeichnet, daß die bipolaren Elemente und die Trennelemente durch isolierte (oder mit isolierenden Buchsen versehene) Zugstangen in Fluchtung gehalten werden, welche sich zwischen Endabdeckungen erstrecken, die mit den Polen einer Gleichstromquelle verbunden und mit Anschlußstükken und mit Dichtungen versehen sind und zwischen den Umfangsteilen der bipolaren Elemente und der Trennelemente sowie zwischen den Reihenendelementen und den Abdeckungen eingesetzt sind.

5. Vorrichtung nach Anspruch 4, dadurch gekennzeichnet, daß der Elektrodenaufbau aus einem dünnen, zugeschnittenen Streckmetallblech hergestellt ist, das durch Schichten eines gewirkten Metallnetzes in Kontakt mit dem Separator gehalten ist.

6. Vorrichtung nach Anspruch 5, bei welcher das Metallblech in der horizontalen Richtung so zugeschnitten und gestreckt ist, daß Öffnungen gebildet werden, die das Entfernen jeglicher Gasphase aus dem Separator verbessern.

FIG 1A

FIG 1B

FIG. 1

FIG. 2

FIG. 3

FIG. 4

FIG. 5

## FIG. 6

FIG.6A

FIG.6B

$$AL = \frac{L_2 - L_1}{L_1} \, 100.$$

FIG.6C

FIG 7

FIG. 8